# EUROPÄISCHE PATENTSCHRIFT

(11) **EP 0 388 848 B1**
(45) Veröffentlichungstag und Bekanntmachung des Hinweises auf die Patenterteilung: **01.12.1993**
(21) Anmeldenummer: 90105129.2
(22) Anmeldetag: 06.03.1990
(51) Int. Cl.: B60D 1/02, B62D 53/12

(54) **Fernanzeigevorrichtung für Fahrzeug-Anhängerkupplungen**
Remote indicator device for vehicle trailer hitches
Dispositif téléindicateur pour des attelages de remorques de véhicules

(30) Priorität: 20.03.1989 DE 3909087
(43) Veröffentlichungstag der Anmeldung: 26.09.1990
(73) Patentinhaber: ROCKINGER Spezialfabrik für Anhängerkupplungen GmbH & Co., D-80904 München (DE)
(72) Erfinder: Glässner, Ralf, D-8000 München 50 (DE)
(74) Vertreter: Weickmann, Heinrich, Dipl.-Ing.

(56) Entgegenhaltungen:
- EP-A- 0 232 898
- DE-A- 3 018 905
- FR-A- 2 394 859
- US-A- 4 271 401

## Beschreibung

Die Erfindung betrifft eine Fernanzeigevorrichtung für Fahrzeug-Anhängerkupplungen, welche bei Ankupplung eines Anhängers eine Schließ- und Verriegelungsstellung einnehmen, mit einem Kupplungssensor, insbesondere induktiven Näherungsschalter, welcher eine den geschlossenen und verriegelten Zustand der Anhängerkupplung kennzeichnende Stellung eines Kupplungsteils überwacht und bei geschlossener und verriegelter Anhängerkupplung ein Signal liefert, und mit einer dem Kupplungssensor nachgeschalteten Zustandsanzeigeeinrichtung, welche gegebenenfalls manuell zur Signalisierung des Kupplungszustands aktivierbar ist.

Derartige Fernanzeigevorrichtungen ermöglichen die Fernüberwachung des Kupplungszustandes einer Anhängerkupplung eines Zugfahrzeugs. Die Anzeigeeinrichtung ist üblicherweise in dem Führerhaus des Zugfahrzeugs untergebracht, so daß der Fahrer des Fahrzeugs die Möglichkeit hat, von seiner normalen Fahrerposition aus das ordnungsgemäße Ankuppeln eines Anhängers zu kontrollieren.

Eine Fernanzeigevorrichtung der eingangs genannten Art ist aus einem Prospekt zu einer Anhängerkupplung des Typs "710 G 6" der Firma Rockinger Spezialfabrik für Anhängerkupplungen GMBH & Co bekannt. Bei der bekannten Fernanzeigevorrichtung überwacht ein als induktiver Näherungsschalter ausgebildeter Kupplungssensor eine den geschlossenen und verriegelten Zustand der Kupplung kennzeichnende Stellung eines Sicherungsbolzens. Solange der Sicherungsbolzen in dieser Stellung verbleibt, liefert der Sensor eine Spannung, mit der eine Kontrollleuchte im Führerhaus des Fahrzeugs betrieben wird. Das Leuchten der Kontrolleuchte signalisiert dem Fahrer, daß die Kupplung ordnungsgemäß geschlossen und verriegelt ist. Der Fahrer hat die Möglichkeit, die Kontrolleuchte mit einem in Reihe mit der Kontrolleuchte geschalteten Schalter auszuschalten, um eine bei der Fahrt störende Daueranzeige bei geschlossener und verriegelter Kupplung zu unterdrücken. In der Betriebsanleitung der bekannten Anhängerkupplung ist vorgeschrieben, daß der Schalter vor jedem Ankupplungsvorgang einzuschalten ist, damit der Fahrer anhand des Aufleuchtens der Kontrolleuchte das Einrücken der Kupplung in den geschlossenen und verriegelten Zustand und die ordnungsgemäße Funktion der Fernanzeigevorrichtung überwachen kann. Der Wechsel von "Kontrolleuchte aus" nach "Kontrolleuchte an" ist dabei ein verläßlicher Hinweis darauf, daß der Kupplungssensor nicht in der Weise defekt ist, daß er unabhängig von der Stellung des Sicherungsbolzens Dauerspannung liefert.

Ein Nachteil der bekannten Fernanzeigevorrichtung besteht darin, daß man das rechtzeitige Einschalten des Schalters zur Aktivierung der Anzeige leicht vergessen oder aus Bequemlichkeit ignorieren kann, so daß eine ordnungsgemäße Kontrolle des Kupplungsvorgangs unterbleibt. Ferner stehen die erforderlichen Bedienungsschritte zum Ein- und Ausschalten der Anzeige einer Benutzerfreundlichkeit der bekannten Fernanzeigevorrichtung entgegen.

Der Erfindung liegt die Aufgabe zugrunde, eine gegenüber dem Stand der Technik verbesserte Fernanzeigevorrichtung anzugeben, welche beim Einrücken der Anhängerkupplung in den geschlossenen und verriegelten Zustand automatisch aktiviert wird und welche eine störende Daueranzeige nach einem Ankupplungsvorgang automatisch unterbindet.

Zur Lösung dieser Aufgabe wird erfindungsgemäß vorgeschlagen, eine triggerbare Zeitschalteinrichtung vorzusehen, welche bei einer Änderung des Kupplungszustandes ein von dem Kupplungssensor ausgelöstes Triggersignal registriert und daraufhin die Zustandsanzeigeeinrichtung für eine vorbestimmte Zeit automatisch aktiviert.

Das Triggersignal zur Triggerung der Zeitschalteinrichtung kann beispielsweise von der Einschaltflanke des Sensorsignals beim Einrücken der Anhängerkupplung in den geschlossenen und verriegelten Zustand abgeleitet werden. Damit wird erreicht, daß die Zustandsanzeigeeinrichtung von der Zeitschalteinrichtung automatisch aktiviert, d. h. anzeigebereit geschaltet wird, wenn die Kupplung in den geschlossenen und verriegelten Zustand übergeht. Zur Detektierung des Ausrückens der Kupplung aus dem geschlossenen und verriegelten Zustand kann die Auschaltflanke des Sensorsignals verwendet werden. Die Anzeige der Zustandsanzeigeeinrichtung kann beispielsweise direkt vom Sensorsignal abgeleitet werden. Die erfindungsgemäße Fernanzeigevorrichtung ermöglicht somit eine Fernüberwachung eines Ankupplungsvorganges, ohne daß der Fahrer Schaltmaßnahmen zur Aktivierung der Anzeigeeinrichtung treffen muß. Eine störende Daueranzeige nach einem Ankupplungsvorgang wird automatisch unterbunden, da die Zeitschalteinrichtung die Anzeigebereitschaft der Anzeigeeinrichtung nach einer vorbestimmten Zeit ausschaltet.

Gemäß einer Weiterbildung der Erfindung umfaßt die Zustandsanzeigeeinrichtung eine Ankupplungskontrolleuchte, die leuchtet, wenn die Anhängerkupplung geschlossen und verriegelt und die Zustandsanzeigeeinrichtung aktiviert ist. Die Kontolleuchte liefert dem Fahrer eine gut registrierbare optische Kontrolle über den Kupplungszustand.

In einer Variante der vorstehenden Ausführungsform ist ein Blinkgeber vorgesehen, der die Ankupplungskontrolleuchte zum Blinken anregt, wenn die Anhängerkupplung den geschlossenen und verriegelten Zustand verlassen hat und die Anzeigeeinrichtung anzeigebereit geschaltet ist. Der Fahrer hat auf diese Weise eine automatische Kontrolle auch über das Ausrücken der Kupplung aus dem geschlossenen und verriegelten Zustand.

In einer weiteren Variante der vorstehenden Ausführungsform ist eine Monitorkontrolleuchte vorgesehen, die leuchtet, wenn die Zustandsanzeigeeinrichtung anzeigebereit geschaltet ist. Die Monitorkontrolleuchte zeigt dem Fahrer an, daß ein Kupplungszustandswechsel stattgefunden hat oder daß die Zustandsanzeigeeinrichtung gegebenenfalls manuell aktiviert ist. Der geschlossene und verriegelte Zustand der Kupplung wird durch das Leuchten der Ankupplungskontrolleuchte und der Monitorkontrollleuchte signalisiert, wohingegen das Ausrücken aus dem geschlossenen und verriegelten Zustand daran zu erkennen ist, daß nur die Monitorkontrolleuchte leuchtet.

Gemäß einer weiteren Ausführungsform ist zusätzlich zur Ankupplungskontrolleuchte eine Abkupplungskontrolleuchte vorgesehen, die bei aktivierter Zustandsanzeigeeinrichtung leuchtet, wenn die Kupplung den geschlossenen und verriegelten Zustand verlassen hat. Damit wird erreicht, daß die Anzeigeeinrichtung das Vorliegen des geschlossenen und verriegelten Zustands oder das Nichtvorliegen des geschlossenen und verriegelten Zustands automatisch und gut voneinander unterscheidbar signalisiert.

Gemäß einer Weiterbildung der Erfindung ist ein den geöffneten und einkuppelbereiten Zustand der Anhängerkupplung erfassender Kupplungsbereitschaftssensor mit der Zustandsanzeigeeinrichtung verbunden. Der vorzugsweise als induktiver Näherungsschalter ausgebildete Kupplungsbereitschaftssensor liefert ein Signal, solange die Kupplung geöffnet und einkuppelbereit ist. Die Zeitschalteinrichtung registriert Änderungen des Ausgangssignals des Kupplungsbereitschaftssenors, um daraufhin die Anzeigeeinrichtung für eine vorbestimmte Zeit anzeigebereit zu schalten. Auf diese Weise werden weitere Information über den Kupplungszustand der Anhängerkupplung gewonnen. Zur Ausnutzung dieser weiteren Informationen ist die Zustandsanzeigeeinrichtung zweckmäßigerweise mit einer Kupplungsbereitschaftskontrolleuchte ausgestattet, die bei aktivierter Zustandsanzeigeeinrichtung leuchtet, wenn die Kupplung geöffnet und einkuppelbereit ist.

Durch die Verwendung eines Sensors für den geschlossenen und verriegelten Zustand und eines Sensors für den geöffneten und einkuppelbereiten Zustand der Anhängerkupplung kann zusätzlich ein Zwischenzustand detektiert werden, der dann vorliegt, wenn die Kupplung weder geschlossen und verriegelt noch geöffnet und einkuppelbereit ist. In diesem Fall liefert keiner der beiden Sensoren ein Signal. In einer Ausführungsform der Erfindung ist eine Warnleuchte zur Signalisierung des Zwischenzustands vorgesehen. Die Warnleuchte zeigt den Zwischenzustand solange an bis er aufgehoben ist. Der Fahrer wird somit ununterbrochen gewarnt, wenn dieser nichtordnungsgemäße Zustand der Anhängerkupplung vorliegt.

In einer Variante der vorstehend genannten Ausführungsform ist eine Zusatzwarnleuchte vorgesehen, die ein Signal, insbesondere ein Blinksignal liefert, wenn die Anhängerkupplung aus dem geöffneten und einkuppelbereiten Zustand heraus in den Zwischenzustand übergegangen ist. Eine weitere Zusatzwarnleuchte liefert ein Signal, wenn die Kupplung aus dem geschlossenen und verriegelten Zustand heraus in den Zwischenzustand übergegangen ist.

Gemäß einer Weiterbildung der Erfindung ist ein weiterer Sensor vorgesehen, der derart an der Anhängerkupplung angeordnet ist, daß er ein Signal liefert, wenn sich ein zu kuppelndes Teil, z. B. die Zugöse eines Anhängers, in der Anhängerkupplung befindet. Diese Ausführungsform ist insbesondere für Kupplungen vorgesehen, bei denen nicht sichergestellt ist, daß sich nach einem Schließvorgang ein zu kuppelndes Teil in der Anhängerkupplung befindet. Die von diesem weiteren Sensor gelieferten Informationen können mit den Informationen des Kupplungssensors und/oder des Kupplungsbereitschaftssensors verknüpft werden, um den ordnungsgemäß eingekuppelten bzw. davon abweichende Zustände der Anhängerkupplung zu detektieren und mittels Kontrolleuchten zu signalisieren.

Die Fernanzeigevorrichtung nach der Erfindung ist vorzugsweise so ausgebildet, daß ihre Versorgungsspannung mit dem Zündschloß, bzw. durch Einschalten des Fahrtschalters des Fahrzeugs einschaltbar ist und daß die Zeitschalteinrichtung die Zustandsanzeigeeinrichtung für eine vorbestimmte Zeit aktiviert, wenn die Versorgungsspannung eingeschaltet wird. Der Fahrer erhält somit beim Starten des Fahrzeugs automatisch eine Information über den Kupplungszustand der Anhängerkupplung.

Insbesondere kann ein von Hand zu betätigender Schalter zur manuellen Aktivierung der Zustandsanzeigeeinrichtung vorgesehen sein. Mittels dieses Schalters kann der Fahrer den Kupplungszustand jederzeit auch unabhängig von Kupplungszustandsänderungen abfragen.

Als Kontrolleuchten bzw. Warnleuchten werden vorzugsweise Leuchtdioden verwendet, die sich insbesondere in der Farbe des von ihnen abgestrahlten Lichtes voneinander unterscheiden.

Neben optischen Anzeigemitteln, wie beispielsweise Leuchtdioden, können auch akustische Kontrollmelder zur Signalisierung von Kupplungszuständen vorgesehen sein.

Im folgenden werden verschiedene bevorzugte Ausführungsbeispiele der Erfindung anhand von Zeichnungen erläutert.
Es zeigt:
- Fig. 1: eine schematische Darstellung einer Anhängerkupplung, für die die Erfindung verwendbar ist,
- Fig. 2: ein Blockschaltbild eines ersten Ausführungsbeispiels mit einem Kupplungssensor und einer Ankupplungskontrolleuchte,
- Fig. 3: eine Variante des ersten Ausführungsbeispiels,
- Fig. 4: ein Blockschaltbild eines dritten Ausführungsbeispiels mit einer Monitorkontrolleuchte zur Signalisierung der Anzeigebereitschaft der Anzeigeeinrichtung,
- Fig. 5: ein Blockschaltbild eines vierten Ausführungsbeispiels mit einer Ankupplungskontrolleuchte und einer Abkupplungskontrolleuchte,
- Fig. 6: ein Blockschaltbild eines fünften Ausführungsbeispiels mit einem Kupplungssensor und mit einem Kupplungsbereitschaftssensor,
- Fig. 7: ein Blockschaltbild eines sechsten Ausführungsbeispiels mit verschiedenen Kontrollanzeigen für den Zwischenzustand der Anhängerkupplung,
- Fig. 8: ein Blockschaltbild eines siebten Ausführungsbeispiels mit einem Sensor zur Registrierung einer Zugöse in der Anhängerkupplung,
- Fig. 9: ein Blockschaltbild eines achten Ausführungsbeispiels mit einem Kupplungssensor, einem Kupplungsbereitschaftssensor und mit einem Sensor zur Registrierung einer Zugöse in der Anhängerkupplung,
- Fig. 10: ein konkretes Schaltbild eines neunten Ausführungsbeispiels, welches im wesentlichen die gleichen Eigenschaften hat wie das in Fig. 5 schematisch dargestellte vierte Ausführungsbeispiel und
- Fig. 11: eine Variante des in Fig. 10 gezeigten Schaltbildes für ein bevorzugtes zehntes Ausführungsbeispiel.

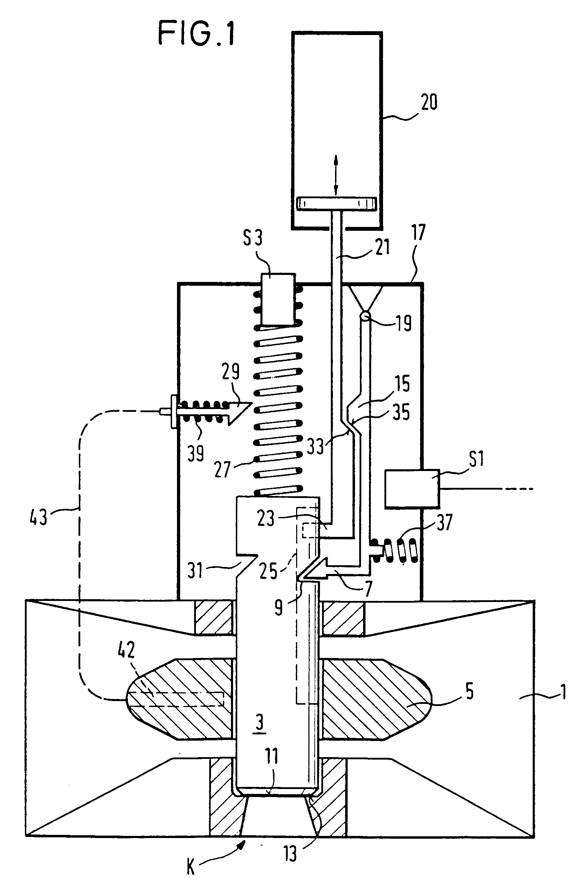

Zur Erläuterung von Anhängerkupplungszuständen und deren Erfassung mit Sensoren ist in Fig. 1 eine Fahrzeug-Anhängerkupplung K mit einem Kupplungssensor S1 und mit einem Kupplungsbereitschaftssensor S3 schematisch dargestellt. Es handelt sich um eine übliche Anhängerkupplung mit einem Kupplungsmaul 1 und einem Kupplungsbolzen 3. In das Kupplungsmaul 1 kann eine Zugöse 5 der Zugdeichsel eines Nachlauffahrzeuges bzw. Anhängers eingeführt werden. Dem Kupplungsbolzen 3 ist ein Verriegelungselement 7 zugeordnet, das in eine Verriegelungskerbe 9 des Kupplungsbolzens 3 eingreift, wenn sich der Kupplungsbolzen 3, wie in Fig. 1 gezeigt, in einer Schließstellung befindet, in der er das Kupplungsmaul 1 durchsetzt und mit seiner unteren Stirnseite 11 an einer Anschlagsfläche 13 des Kupplungsmauls 1 anliegt. Das Verriegelungselement 7 ist an einem Schwenkhebel 15 angebracht, der an einem fest mit dem Kupplungsmaul 1 verbundenen Gehäuse 17 um eine Schwenkachse 19 schwenkbar gelagert ist.

Zur Entriegelung und Öffnung der Anhängerkupplung K ist eine mittels einer Hubeinrichtung 20 vertikal bewegbare Hubstange 21 vorgesehen. Die Hubstange 21 hat einen Auskupplungsvorsprung 23, der in eine Auskupplungskerbe 25 des Kupplungsbolzens 3 eingreift. Es ist zu bemerken, daß sich das Verriegelungselement 7 und die Verriegelungskerbe 9 in einer anderen Ebene befinden als der Auskupplungsvorsprung 23 und die Auskupplungskerbe 25. Der Kupplungsbolzen 3 ist durch eine Hauptfeder 27 in die in Fig. 1 gezeigte Schließstellung vorgespannt und kann durch den Auskupplungsvorsprung 23 in eine Öffnungsstellung angehoben werden. Zur Arretierung des Kupplungsbolzens 3 in der Öffnungsstellung ist ein Verrastungselement 29 vorgesehen, welches in der Öffnungsstellung des Kupplungsbolzens 3 in eine Verrastungskerbe 31 des Kupplungsbolzens 3 eingreift.

An der Hubstange 21 ist eine Nockenfläche 33 angebracht, welche mit einer Gegennockenfläche 35 des Schwenkhebels 15 zusammenwirkt. Der Auskupplungsvorsprung 23 hat Spiel gegenüber der Auskupplungskerbe 25 des Kupplungsbolzens 3. Wenn zum Auskuppeln die Hubstange 21 mittels der Hubeinrichtung 20 angehoben wird, so wird zunächst das Verriegelungselement 7 durch das Zusammenwirken der Nockenfläche 33 mit der Gegennockenfläche 35 gegen die Wirkung einer ersten Hilfsfeder 37 gegen den Uhrzeigersinn ausgeschwenkt. Die Ausschwenkung ist beendet, wenn der Auskupplungsvorsplung 23 sein Spiel innerhalb der Auskupplungskerbe 25 durchlaufen hat, so daß danach der Kupplungsbolzen 3 - von dem Verriegelungselement 7 nunmehr freigegeben - von der Hubstange 21 nach oben in die Öffnungsstellung mitgenommen werden kann. In der Öffnungsstellung rastet das Verrastungselement 29 unter der Wirkung einer weiteren Hilfsfeder 39 in die Verrastungskerbe 31 des Kupplungsbolzens 3 ein, so daß dieser in der Öffnungsstellung verrastet ist. Die Anhängerkupplung K befindet sich dann im geöffneten und einkuppelbereiten Zustand. Wenn der Kupplungsbolzen 3 sich in der Schließstellung befindet und das Verriegelungselement 7 in die Verriegelungskerbe 9 eingreift, wie in Fig. 1 gezeigt, dann ist die Anhängerkupplung K im geschlossenen und verriegelten Zustand. In diesem Fall liefert der Kupplungssensor S1 eine Spannung, wohingegen der Kupplungsbereitschafts sensor S3 dann keine Spannung liefert. Wenn der Kupplungsbolzen 3 sich in der ßffnungsstellung befindet, also die Kupplung K geöffnet und einkuppelbereit ist, liefert der Kupplungsbereit schaftssensor S3 eine Spannung, wohingegen der Kupplungssensor S1 dann kein Spannungssignal abgibt.

Sobald der Kupplungsbolzen 3 in der Öffnungsstellung durch das Verrastungselement 29 und die Verrastungskerbe 31 verrastet ist, kann die Hubeinrichtung 20 die Hubstange 21 nach unten in die Stellung gemäß Fig. 1 zurückbewegen, ohne daß der Kupplungsbolzen 3 sich aus der Öffnungsstellung entfernt. Hierzu ist die Auskupplungskerbe 25 entsprechend lang bemessen.

Wenn die Zugöse 5 eingekuppelt werden soll, so stößt man mit dem Zugfahrzeug rückwärts, so daß die Zugöse 5 in das Kupplungsmaul 1 eindringt. Dabei stößt die Kupplungsöse 5 auf einen Lösehebel 42, der über eine Übertragungseinrichtung 43 mit dem Verrastungselement 29 verbunden ist. Der Lösehebel 42 veranlaßt beim Auftreffen der Kupplungsöse 5 ein Zurückziehen des Verrastungselementes 29 nach links (bezogen auf Fig. 1), so daß der Kupplungsbolzen 3 unter der Wirkung der Haupfeder 27 in die Schließstellung zurückfallen und dabei die Kupplungsöse 5 durchsetzen kann. Da die Kupplungsöse 5 den Lösehebel 42 betätigt, ist sichergestellt, daß die Anhängerkupplung im ordnungsgemäß eingekuppelten Zustand ist, wenn der Kupplungsbolzen 3 die Schließstellung gemäß Fig. 1 eingenommen hat.

Bei Kupplungskonstruktionen, bei denen der Kupplungsbolzen in die Schließstellung übergehen kann, ohne daß eine Zugöse in das Kupplungsmaul lagerichtig eingeführt ist, kann zur Registrierung der Zugöse in dem Kupplungsmaul ein weiterer Sensor an der Kupplung angeordnet sein.

Die Hubeinrichtung 20 kann beispielsweise als manuell betätigbare oder automatisch fernsteuerbare Hubeinrichtung ausgebildet sein.

Die Erfindung ist für die in Fig. 1 gezeigte Anhängerkupplung verwendbar; sie ist jedoch nicht nur auf derartige Anhängerkupplungen beschränkt.

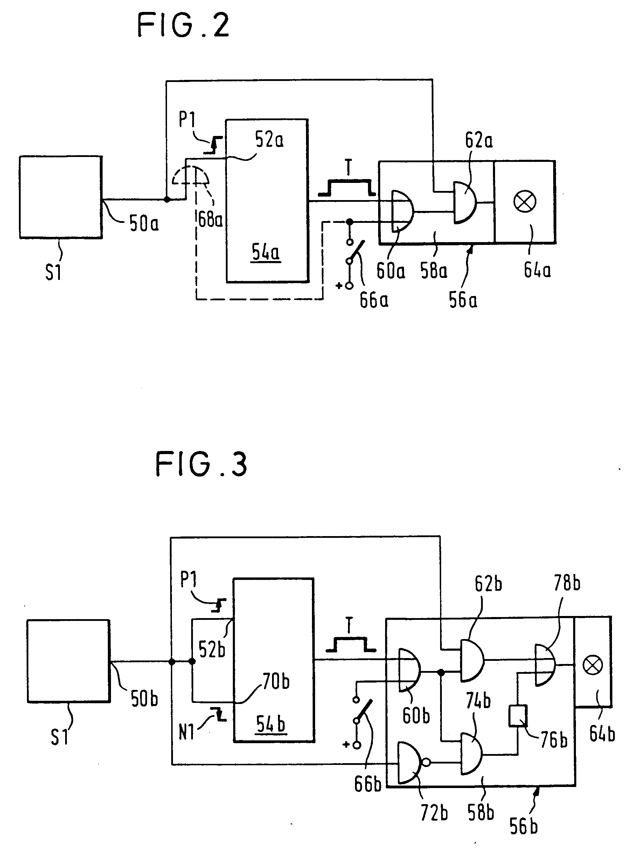

Nachstehend werden bevorzugte Ausführungsbeispiele der Erfindung anhand der Figuren 2 bis 10 erläutert. Die Anhängerkupplung ist in diesen Figuren nicht gezeigt. Gleiche oder gleichwirkende Teile der verschiedenen Ausführungsbeispiele sind in den Figuren i. a. mit gleichen Bezugsziffern, jedoch mit unterschiedlichen, den Bezugsziffern nachgestellten Buchstaben gekennzeichnet.

In Fig. 2 bezeichnet S1 einen Kupplungssensor, der über seinen Ausgang 50a ein im wesentlichen konstantes Spannungssignal abgibt, wenn die Anhängerkupplung im geschlossenen und verriegelten Zustand ist, und der keine Spannung liefert bzw. Massepotential an seinem Ausgang 50a führt, wenn die Anhängerkupplung K aus dem geschlossenen und verriegelten Zustand herausgerückt ist. Der Ausgang 50a des Kupplungssensors S1 ist mit dem Eingang 52a einer triggerbaren Zeitschalteinrichtung 54a und mit einer Anzeigeeinrichtung 56a verbunden.

Die triggerbare Zeitschalteinrichtung 54a gibt einen positiven Impuls T vorbestimmter Dauer ab, wenn eine positive Einschaltflanke P1 der Sensorausgangsspannung auftritt. Die Einschaltflanke P1 tritt immer dann auf, wenn die Anhängerkupplung K in den geschlossenen und verriegelten Zustand übergeht. Der von der triggerbaren Zeitschalteinrichtung 54a abgegebene Impuls T vorbestimmter Dauer wird einer Steuerschaltung 58a der Anzeigeeinrichtung 56a zugeführt. Der Impuls T gelangt über ein OR-Gatter 60a an einen ersten von zwei Eingängen eines AND-Gatters 62a. Der zweite Eingang des AND-Gatters 62a ist mit dem Ausgang 50a des Kupplungssensors S1 verbunden. Der Ausgang des AND-Gatters 62a ist einer Ankupplungskontrolleuchte 64a vorgeschaltet, um die Ankupplungskontrolleuchte 64a anzusteuern und zum leuchten zu bringen, wenn an beiden Eingängen des AND-Gatters 62a positive Spannung anliegt. Die Anzeigeeinrichtung 56a wird automatisch durch den Ausgangsimpuls T der Zeitschalteinrichtung 54a für die Dauer des Impulses T aktiviert, wenn die Anhängerkupplung in den geschlossenen und verriegelten Zustand einrückt. Die Ankupplungskontrolleuchte 64a leuchtet jedoch nur solange während des Auftretens des Ausgangsimpulses T der Zeitschalteinrichtung 54a, wie der Kupplungssensor S1 Spannung liefert, nämlich solange, wie die Anhängerkupplung während des Auftretens des Impulses T in dem geschlossenen und verriegelten Zustand verbleibt.

Für die manuelle Abfrage des Kupplungszustands ist ein Schalter 66a vorgesehen. Der Schalter 66a ist an einem zweiten Eingang des OR-Gatters 60a angeschlossen. Wenn der Schalter 66a betätigt (geschlossen) wird, dann verbindet er den zweiten Eingang des OR-Gatters 60a mit einem positiven Potential und schaltet dadurch die Anzeigeeinrichtung 56a anzeigebereit. Die Ankupplungskontrolleuchte 64a leuchtet, wenn die Anhängerkupplung geschlossen und verriegelt und der Schalter 66a geschlossen ist. Leuchtet die Ankupplungskontrolleuchte 64a nicht wenn der Schalter 66a geschlossen ist, so bedeutet dies, das die Kupplung nicht geschlossen und verriegelt ist.

Der Schalter 66a kann, wie in Fig. 2 gestrichelt eingezeichnet ist, auch so geschaltet sein, daß er über ein OR-Gatter 68a mit dem Eingang 52a der triggerbaren Zeitschalteinrichtung 54a verbunden ist. Bei einer solchen Schaltung wird durch Betätigen des Schalters 66a die Zeitschalteinrichtung 54a getriggert, so daß diese den Ausgangsimpuls T zur Aktivierung der Anzeigeeinrichtung 56a abgibt. Der Schalter 66a kann beispielsweise als Tastschalter bzw. Tippschalter ausgebildet sein.

Fig. 3 zeigt eine Variante des in Fig. 2 schematisch dargestellten Ausführungsbeispiels 1. Nachstehende Erläuterungen zu diesem zweiten Ausführungsbeispiel beziehen sich auf Änderungen gegenüber dem ersten Ausführungsbeispiel.

Der Ausgang 50b des Kupplungssensors S1 ist zusätzlich mit einem Eingang 70b der triggerbaren Zeitschalteinrichtung 54b verbunden. Das Auftreten einer Ausschaltflanke N1 der Sensorausgangsspannung an dem Eingang 70b der Zeitschalteinrichtung 54b führt ebenfalls zur Triggerung der Zeitschalteinrichtung 54b und damit zu einem Impuls T vorbestimmter Dauer am Ausgang der Zeitschalteinrichtung 54b.

Die Steuerschaltung 58b umfaßt einen Inverter 72b, dessen Eingang mit dem Ausgang 50b des Kupplungssensors S1 verbunden ist und dessen Ausgang mit einem von zwei Eingängen eines AND-Gatters 74b verbunden ist. Der zweite Eingang des AND-Gatters 74b ist an dem Ausgang des OR-Gatters 60b angeschlossen. Das AND-Gatter 74b dient zur Ansteuerung eines Blinkgebers 76b, der ein periodisches Rechtecksignal liefert, wenn an dem Ausgang des AND-Gatters 74b Spannung anliegt. Der Ausgang des Blinkgebers 76b und der Ausgang des AND-Gatters 62b sind mit den Eingängen eines OR-Gatters 70b verbunden, welches der Ankupplungskontrollleuchte 64b vorgeschaltet ist.

Wie beim ersten Ausführungsbeispiel leuchtet die Ankupplungskontrolleuchte 64b, wenn die Anhängerkupplung geschlossen und verriegelt ist und die Anzeigeeinrichtung 56b mittels der Zeitschalteinrichtung 54b oder mittels des Schalters 66b aktiviert ist. Im Unterschied zum ersten Ausführungsbeispiel blinkt die Ankupplungskontrolleuchte 64b, wenn die Anzeigeeinrichtung 56b aktiviert ist und die Anhängerkupplung nicht geschlossen und verriegelt ist.

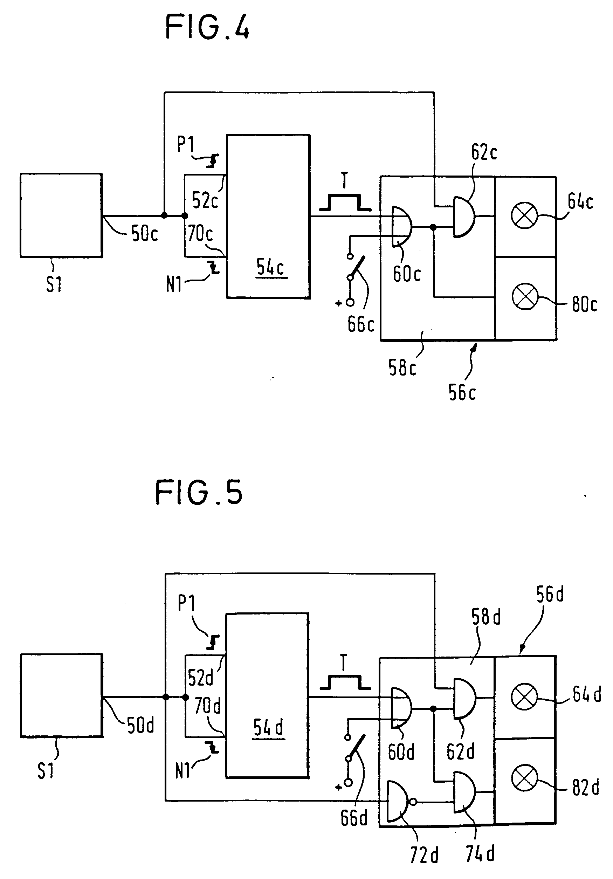

Fig. 4 zeigt ein drittes Ausführungsbeispiel der Erfindung. Die nachstehenden Erläuterungen zu dem dritten Ausführungsbeispiel beziehen sich im wesentlichen auf Abweichungen gegenüber dem in Fig. 2 gezeigten ersten Ausführungsbeispiel.

Die Fernanzeigevorrichtung gemäß Fig. 4 umfaßt eine Monitorkontrolleuchte 80c, die von dem Ausgangssignal des OR-Gatters 60c angesteuert wird, um durch leuchten anzuzeigen, daß die Anzeigeeinrichtung 56c aktiviert, d. h. anzeigebereit geschaltet ist. Ein Eingang 70c der Zeitschalteinrichtung 54c ist mit dem Ausgang 50c des Kupplungssensors S1 verbunden. Das Auftreten der negativen Ausschaltflanke N1 der Sensorausgangsspannung an dem Eingang 70c der Zeitschalteinrichtung 54c bewirkt das Auftreten eines Impulses T vorbestimmter Dauer am Ausgang der Zeitschalteinrichtung 54c. Die Monitorkontrolleuchte 80c leuchtet somit, wenn sich der von dem Kupplungssensor S1 überwachte Kupplungszustand geändert hat, oder wenn der Schalter 66c betätigt ist. Leuchtet nur die Monitorkontrolleuchte 80c, dann kann der Fahrer daraus ersehen, daß die Anhängerkupplung den geschlossenen und verriegelten Zustand verlassen hat. Leuchtet die Monitorkontrolleuchte 80c und die Ankupplungskontrolleuchte 64c, dann bedeutet dies. daß die Anhängerkupplung geschlossen und verriegelt ist. Die Fernanzeigevorrichtung liefert somit automatisch eine zeitlich begrenzte Anzeige des aktuellen Kupplungszustands nach einer Änderung des Kupplungszustands.

In Fig. 5 ist ein viertes Ausführungsbeipiel der Erfindung schematisch dargestellt. Die nachstehenden Erläuterungen hierzu betreffen Änderungen gegenüber dem in Fig. 2 gezeigten ersten Ausführungsbeispiel.

Die Fernanzeigevorrichtung gemäß Fig. 5 hat eine Abkupplungskontrolleuchte 82d, welche von einem AND-Gatter 74d angesteuert wird. Das AND-Gatter 74d verknüpft das Ausgangssignal des OR-Gatters 60d mit dem invertierten Ausgangssignal des Kupplungssensors S1. Zur Invertierung des Ausgangssignals des Kupplungssensors S1 ist ein Inverter 72d vorgesehen.

Die Zeitschalteinrichtung 54d wird bei jedem Pegelwechsel am Ausgang des Kupplungssensors S1 getriggert und aktiviert daher die Anzeigeeinrichtung 56d sowohl beim Einrücken der Anhängerkupplung in den geschlossenen und verriegelten Zustand als auch beim Ausrücken der Anhängerkupplung aus dem geschlossenen und verriegelten Zustand. Die Abkupplungskontrolleuchte 82d leuchtet, wenn die Anzeigeeinrichtung 56d aktiviert und die Anhängerkupplung nicht geschlossen und verriegelt ist. Auch bei diesem vierten Ausführungsbeispiel wird der aktuelle Kupplungszustand nach einer Änderung des Kupplungszustands automatisch für eine vorbestimmte Zeit angezeigt.

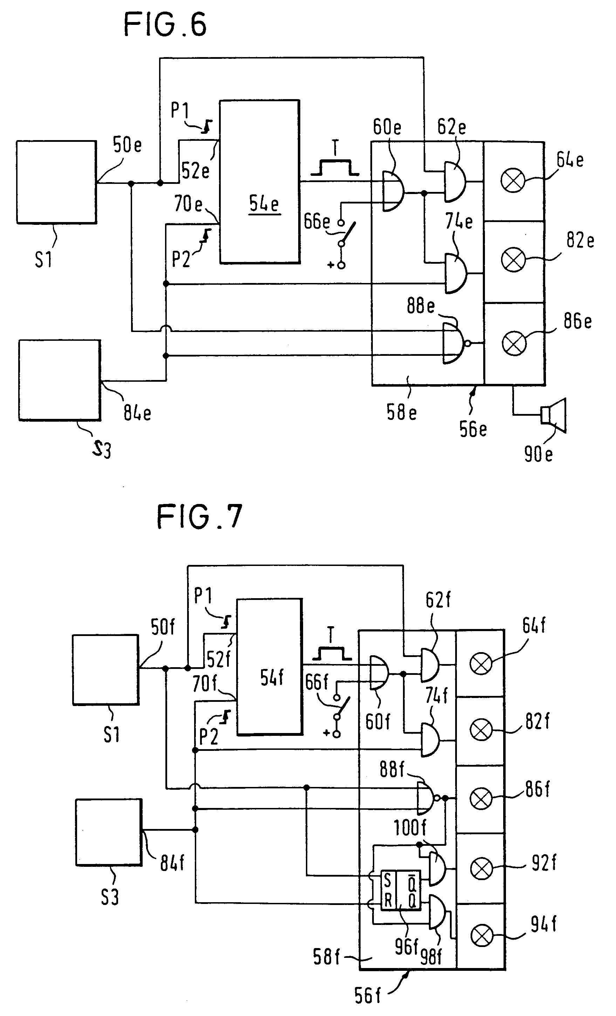

Das in Fig. 6 schematisch dargestellte fünfte Ausführungsbeispiel wird nachstehend in Bezug auf Änderungen gegenüber dem in Fig. 5 gezeigten vierten Ausführungsbeispiel erläutert.

Das in Fig. 6 dargestellte Ausführungsbeispiel umfaßt einen Kupplungsbereitschaftssensor S3, welcher eine Spannung liefert, wenn die Anhängerkupplung geöffnet und einkuppelbereit ist. Der Ausgang 84e des Kupplungsbereitschaftssensors S3 ist an einem Eingang 70e der Zeitschalteinrichtung 54e angeschlossen. In diesem Fall ist die Zeitschalteinrichtung 54e so ausgebildet, daß sie bei Auftreten einer positiven Flanke P2 am Eingang 70e, also beim Einrücken der Anhängerkupplung in den geöffneten und einkuppelbereiten Zustand getriggert wird und somit einen Impuls T vorbestimmter Dauer über ihren Ausgang abgibt. Im Unterschied zum vierten Ausführungsbeispiel ist das AND-Gatter 74e nicht über einen Inverter an dem Ausgang des Kupplungssensors S1, sondern direkt an dem Ausgang 84e des Kupplungsbereitschaftssensors S3 angeschlossen.
Die Ankupplungskontrolleuchte 64e leuchtet, wenn die Anzeigeeinrichtung 56e aktiviert und die Anhängerkupplung geschlossen und verriegelt ist. Die Abkupplungskontrolleuchte 82e leuchtet, wenn die Anzeigeeinrichtung aktiviert und die Anhängerkupplung geöffnet und einkuppelbereit ist. Der Fahrer hat die Möglichkeit sowohl einen Ankupplungsvorgang als auch einen Abkupplungsvorgang fernzuüberwachen, ohne irgendeinen Schalter betätigen zu müssen. Die Leuchte 64e bzw. 82e geht nach Ablauf des Impulses T automatisch aus, so daß keine störende Daueranzeige stattfindet.

Eine Warnleuchte 86e signalisiert einen Zwischenzustand, der vorliegt, wenn die Anhängerkupplung weder geöffnet und einkuppelbereit noch geschlossen und verriegelt ist. Zur Ansteuerung der Warnleuchte 86e ist dieser ein NOR-Gatter 88e vorgeschaltet, dessen einer Eingang mit dem Ausgang 50e des Kupplungssensors S1 und dessen anderer Eingang mit dem Ausgang 84e des Kupplungsbereitschaftssensors S3 verbunden ist. Die Warnleuchte 86e wird unabhängig von der Zeitschalteinrichtung 54e angesteuert, wenn keiner der Sensoren S1 und S3 Spannung liefert. Die Warnleuchte 86e kann beispielsweise als Blinkleuchte ausgebildet sein. Darüberhinaus kann ein akustischer Signalmelder 90e mit der Warnleuchte 86e gekoppelt sein.

Eine Erweiterung des vorstehend beschriebenen Ausführungsbeispiels 5 ist in Fig. 7 schematisch dargestellt. Dieses sechste Ausführungsbeispiel umfaßt eine Zusatzwarnleuchte 92f, welche unabhängig von der Aktivierung der Anzeigeeinrichtung 56f durch die Zeitschalteinrichtung 54f oder den Schalter 66f leuchtet, wenn die Anhängerkupplung in dem Zwischenzustand ist und vorher in dem geöffneten und einkuppelbereiten Zustand war. Eine weitere Zusatzwarnleuchte 94f leuchtet in entsprechender Weise, wenn die Anhängerkupplung in dem Zwischenzusand ist und vorher geschlossen und verriegelt war. Zur Speicherung der Information in welchem Zustand die Anhängerkupplung vor dem Übergang in den Zwischenzustand war ist ein R-S Flip-Flop 96f vorgesehen. Der Setz-Eingang S des Flip-Flops 96f ist an dem Ausgang 50f des Kupplungssensors S1 angeschlossen. Der Q-Ausgang Q des Flip-Flops 96f gibt eine positive Spannung aus, wenn das Flip-Flop 96f durch das Sensorausgangssignal gesetzt worden ist. Der Q-Ausgang Q des Flip-Flops 96f ist an einem von zwei Eingängen eines AND-Gatters 98f, welches zur Ansteuerung der weiteren Zusatzwarnleuchte 94f vorgesehen ist, angeschlossen. Der andere Eingang des AND-Gatters 98f ist mit dem Ausgang des NOR-Gatters 88f verbunden. Die weitere Zusatzwarnleuchte 94f wird demnach über das AND-Gatter 98f nur dann angesteuert, wenn sowohl am Q-Ausgang Q des Flip-Flops 96f als auch am Ausgang des NOR-Gatters 88f eine positive Spannung anliegt. Dies ist der Fall, wenn die Anhängerkupplung K in dem Zwischenzustand ist und vorher geschlossen und verriegelt war.
Der Rücksetz-Eingang R des Flip-Flops 96f ist an dem Ausgang 84e des Kupplungsbereitschaftssensors S3 angeschlossen. Der Q̅- Ausgang Q̅ des Flip-Flops 96f gibt eine positive Spannung aus, wenn das Flip-Flop 96f durch das Ausgangssignal des Kupplungsbereitschaftssensors S3 zurückgesetzt wird. Zur Ansteuerung der Zusatzwarnleuchte 92f ist ein AND-Gatter 100f vorgesehen, an dessen einem Eingang der Q̅-Ausgang des Flip-Flops 96f und an dessen anderem Eingang der Ausgang des NOR-Gatters 88f angeschlossen ist. Die Zusatzwarnleuchte 92f wird somit angesteuert, wenn die Anhängerkupplung in dem Zwischenzustand ist und vorher geöffnet und einkuppelbereit war.

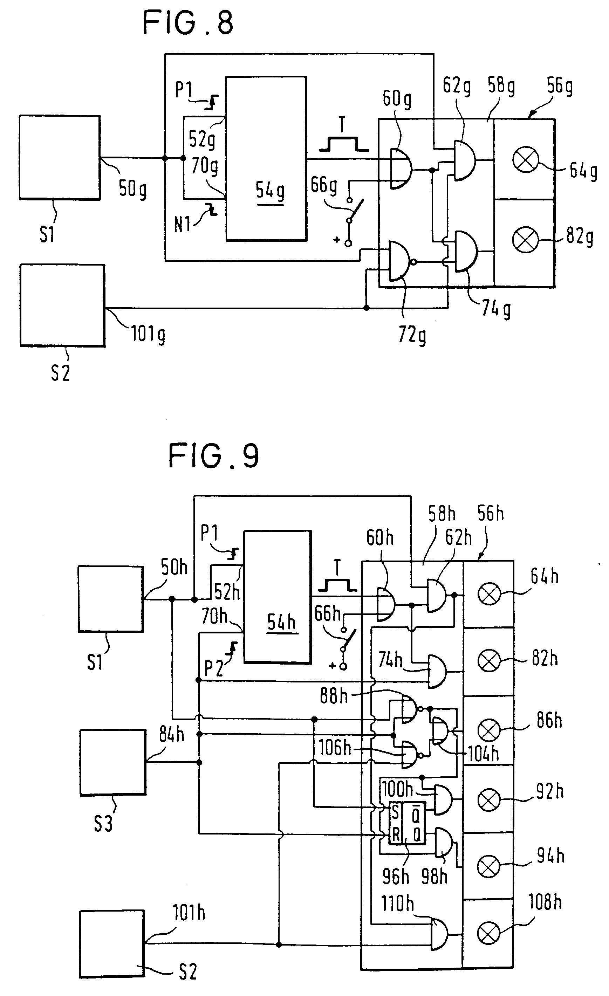

Fig. 8 zeigt ein Blockschaltbild eines siebten Ausführungsbeispiels der Erfindung.
Die Erläuterungen hierzu betreffen die Änderungen gegenüber dem in Fig. 5 dargestellten vierten Ausführungsbeispiel.

Die in Fig. 8 gezeigte Fernanzeigevorrichtung umfaßt einen weiteren Sensor S2, welcher das Vorhandensein einer Zugöse im Kupplungsmaul der Anhängerkupplung registriert. Dieser Sensor S2 ist wie die anderen Sensoren als induktiver Näherungsschalter ausgebildet. Der Sensor S2 liefert eine Spannung, wenn eine Zugöse in das Kupplungsmaul eingeführt ist. Der Ausgang 101g des Sensors S2 ist mit einem Eingang des AND-Gatters 62g verbunden, welches in diesem Fall drei Eingänge aufweist. Ferner ist der Ausgang des Sensors S2 an einem von zwei Eingängen eines NAND-Gatters 72g angeschlossen, welches den Inverter 72d des vierten Ausführungsbeispiels ersetzt. Der zweite Eingang des NAND-Gatters 72g ist an dem Ausgang 50g des Kupplungssensors S1 angeschlossen. Die Ankupplungskontrolleuchte 64 leuchtet, wenn die Anhängerkupplung geschlossen und verriegelt ist und der weitere Sensor S2 eine Kupplungsöse in der Anhängerkupplung registriert. Die Abkupplungskontrolleuchte 82g leuchtet, wenn die Anzeigeeinrichtung 56g aktiviert und die Anhängerkupplung nicht geschlossen ist und/oder keine Zugöse in das Kupplungsmaul eingeführt ist.

In dem in Fig. 9 schematisch dargestellten achten Ausführungsbeispiel sind im wesentlichen die Merkmale des sechsten und des siebten Ausführungsbeispiels miteinander kombiniert. Die Ansteuerung der Ankupplungskontrolleuchte 64h, der Abkupplungskontrolleuchte 82h sowie der Zusatzwarnleuchten 92h und 94h erfolgt dabei wie in dem in Fig. 7 gezeigten sechsten Ausführungsbeispiel Die Warnleuchte 86h zur Anzeige des Zwischenzustandes ist jedoch so beschaltet, daß sie auch dann leuchtet, wenn der Zustand "Anhängerkupplung nicht geöffnet und/oder keine Zugöse im Kupplungsmaul" vorliegt. Die Warnleuchte 86h wird von einem OR-Gatter 104h angesteuert, dessen einer Eingang mit dem Ausgang des NOR-Gatters 88h verbunden ist und dessen anderer Eingang an dem Ausgang eines NOR-Gatters 106h angeschlossen ist. Ein Eingang des NOR-Gatters 106h ist mit dem Ausgang 101h des die Kupplungsöse überwachenden Sensors S2 verbunden. Der anderen Eingang des NOR-Gatters 106h ist an dem Ausgang 84h des Kupplungsbereitschaftssensors S3 angeschlossen.

Es ist eine weitere Kontrolleuchte 108h bei dem achten Ausführungsbeispiel vorgesehen, welche leuchtet, wenn die Anzeigeeinrichtung 56h manuell oder mittels der Zeitschalteinrichtung 54h automatisch aktiviert ist und gleichzeitig die Anhängerkupplung geschlossen und verriegelt ist und die Zugöse in das Kupplungsmaul eingeführt ist. Die kontrolleuchte 108h wird von einem AND-Gatter 110h angesteuert, dessen einer Eingang am Ausgang 84h des Sensors S2 angeschlossen ist und dessen anderer Eingang mit dem Ausgang des zur Ansteuerung der Ankupplungskontrolleuchte 64h verwendeten AND-Gatters 62h verbunden ist.

Die Kontrolleuchten bzw. Warnleuchten der vorstehend beschriebenen Ausführungsbeispiele sind vorzugsweise als Leuchtdioden ausgebildet, die sich in der Farbe des emittierten Lichtes voneinander unterscheiden. Die Anzeigeeinrichtung kann darüberhinaus zur Signalisierung eines oder mehrerer verschiedener Kupplungszustände mit akustischen Meldern versehen sein. Ferner können eine oder mehrere Leuchten als Blinkleuchten ausgebildet sein.

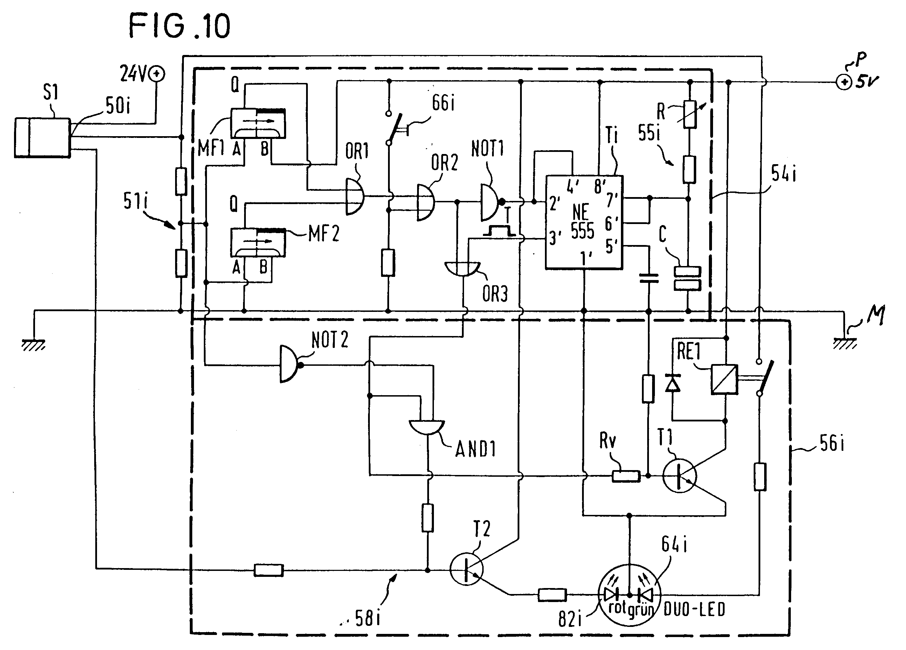

Nachstehend wird der in Fig. 10 gezeigte konkrete Schaltplan eines neunten Ausführungsbeispiels beschrieben. Dieses neunte Ausführungsbeispiel ähnelt in seinen Funktionen dem in Fig. 5 gezeigten vierten Ausführungsbeispiel.

Das Ausführungsbeispiel gemäß Fig. 10 umfaßt einen Kupplungssensor S1, eine triggerbare Zeitschalteinrichtung 54i sowie eine Zustandsanzeigeeinrichtung 56i.

Der Kupplungssensor S1 ist ein Induktivschalter, welcher so an der Anhängerkupplung angeordnet ist. daß er an seinem Ausgang 50i positive Spannung bzw. positives Potential liefert, wenn die Anhängerkupplung geschlossen und verriegelt ist. Die triggerbare Zeitschalteinrichtung 54i umfaßt ein erstes Monoflop MF1, ein zweites Monoflop MF2, ein erstes OR-Gatter OR1, ein zweites OR-Gatter OR2, einen Inverter NOT1, einen Timerschaltkreis Ti vom Typ NE 555 und eine Einrichtung 55i zur Impulsdauervoreinstellung des Timers Ti.

Die Anzeigeeinrichtung 56i umfaßt eine Steuerschaltung 58i mit einem Inverter NOT2, einem AND-Gatter AND1, einem Relais RE1 und mit Transistoren T1 und T2, sowie eine Ankupplungskontrolleuchte 64i und eine Abkupplungskontrolleuchte 82i. Der Ausgang 50i des Kupplungssensors S1 ist über einen Spannungsteiler 51i, welcher die Ausgangsspannung des Kupplungssensors S1 auf 5V TTL-Pegel begrenzt, an einem Eingang A des Monoflops MF1 und an einem Eingang B des Monoflops MF2 angeschlossen. Der Eingang B des Monoflops MF1 ist mit dem Pluspol P einer 5V-Gleichspannungsquelle verbunden. Der Eingang A des Monoflops MF2 ist mit Masse M verbunden. In dieser Beschaltung wird das Monoflop MF1 immer dann getriggert, wenn eine Einschaltflanke (ansteigende Flanke) des Sensorsausgangssignals auftritt, wohingegen das Monoflop MF2 immer dann getriggert wird, wenn eine Ausschaltflanke (fallende Flanke) des Sensorausgangssignals auftritt. Jedes Monoflop liefert nach seiner Triggerung einen positiven Impuls von etwa 0.5 s Dauer. Das Monoflop MF1 liefert also einen Impuls, wenn die Kupplung geschlossen und verriegelt wird, wohingegen das Monoflop MF2 einen Impuls abgibt, wenn die Anhängerkupplung aus der geschlossenen und verriegelten Stellung herausrückt. Die Ausgänge von Monoflop MF1 und MF2 sind mit Eingängen des OR-Gatters OR1 verbunden, so daß an dessen Ausgang immer dann ein Impuls auftritt, wenn sich der von dem Kupplungssensor S1 übelwachte Kupplungszustand ändert. Der Ausgang des OR-Gatters OR1 ist über das OR-Gatter OR2 und über den Inverter NOT1 mit einem Triggereingang 2′des Timers Ti verbunden. Der Timer Ti vom Typ NE 555 gibt an seinem Ausgang 3′ einen Impuls T vorbestimmter Dauer ab, wenn an seinem Triggereingang 2′ eine negative Signalflanke auftritt. Der Inverter NOT1 invertiert die positiven Ausgangsimpulse der Monoflops MF1 und MF2, so daß eine zur Triggerung des Timers Ti erforderliche negative Signalflanke immer dann auftritt, wenn eines der Monoflops MF1 und MF2 eine ansteigende Signalflanke an seinem Ausgang Q ausgibt, nämlich wenn sich der Kupplungszustand ändert. Zur Voreinstellung der Dauer des Timerausgangsimpulses T ist der Timer Ti mit einem Kondensator C und einem Potentiometerwiderstand R beschaltet. Vorzugsweise wird der Timer Ti so voreingestellt, daß seine Ausgangsimpulsdauer in der Größenordnung von einer Minute liegt. Der Timer ist retriggerbar geschaltet. Dies wird dadurch erreicht, daß man den Triggereingang 2′ mit einem Reseteingang 4′ verbindet. Während der Timerlaufzeit, d. h. während der Dauer eines Ausgangsimpulses, am Triggereingang 2′auftretende negative Flanken starten den Timer Ti erneut mit voller Laufzeit.

Der Ausgang 3′ des Timers Ti ist über das OR-Gatter OR3 und einen Vorwiderstand Rv mit dem Eingang (der Basis) des Transistors T1 verbunden. Der Kollektor des npn-Transistors T1 ist mit dem Relais RE1 verbunden, und der Emitter des Transistors T1 ist mit Masse M verbunden. Der Transistor T1 steuert das Relais RE1. Das Relais RE1 zieht an, wenn am Eingang (der Basis) des Transistors T1 Spannung anliegt, was der Fall ist, wenn ein Ausgangsimpuls T des Timers Ti auftritt.
Wenn das Relais RE1 angezogen ist, verbindet es den Ausgang 50i des Kupplungssensors S1 und die Ankupplungskontrolleuchte 64i elektrisch miteinander. Die Ankupplungskontrolleuchte 64i leuchtet also, wenn die Anhängerkupplung geschlossen und verriegelt ist und der Timer Ti läuft.

Der Ausgang 50i des Kupplungssensors S1 ist ferner über den Inverter NOT2 und über das AND-Gatter AND1 mit dem Eingang (der Basis) des npn-Transistors T2 verbunden. Der Transistor T2 ist mit seinem Kollektor an dem Pluspol P der 5V- Gleichsspannungsquelle und mit seinem Emitter über einen Widerstand an der Abkupplungskontrolleuchte 82i angeschlossen. An dem dem Inverter NOT2 nachgeschalteten Eingang des AND-Gatters AND1 liegt Spannung an, wenn die Kupplung nicht im geschlossenen und verriegelten Zustand ist. Der andere Eingang des AND-Gatters AND1 ist über das OR-Gatter OR3 mit dem Ausgang 3′ des Timers Ti verbunden. An dem Ausgang des AND-Gatters AND1 liegt Spannung an, wenn der Timer Ti läuft und die Anhängerkupplung nicht geschlossen und verriegelt ist. In diesem Fall schaltet der Transistor T2 durch und legt Spannung an die Abkupplungskontrolleuchte 82i an. Die Abkupplungskontrolleuchte 82i leuchtet also, wenn die Anhängerkupplung den geschlossenen und verriegelten Zustand verlassen hat und wenn der Timer Ti läuft.

Die Fernanzeigevorrichtung liefert also bei jedem Zustandswechsel der Anhängerkupplung ohne irgendwelche manuellen Schalterbetätigungen eine Anzeige über den Zustand der Anhängerkupplung für die Dauer der Timerlaufzeit.

Die Ankupplungskontrolleuchte 64i und die Abkupplungskontrolleuchte 82i sind in einer rot/grün Duo-Leuchtdiode mit einem für beide Leuchtdiodenteile gemeinsamen Masseanschluß zusammengefaßt. Der grün leuchtende Teil der Duo-Leuchtdiode bildet die Ankupplungskontrolleuchte 64i und der rot leuchtende Teil der Duo-Leuchtdiode bildet die Abkupplungskontrolleuchte 82i.

Ein Tastschalter 66i ermöglicht die manuelle Fernüberprüfung des Kupplungszustands. Wenn der Schalter 66i betätigt (geschlossen) wird, verbindet er einen Eingang des OR-Gatters OR2 mit der positiven 5V-Spannung, so daß auch in diesem Fall eine Flanke zur Triggerung des Timers Ti auftritt. Da der Ausgang des OR-Gatters OR2 mit einem Eingang des OR-Gatters OR3 direkt verbunden ist, bleibt die Anzeigeeinrichtung 56i bei geschlossenem Schalter 66i aktiviert, auch wenn der Timer Ti abgelaufen ist. Die Direktverbindung zwischen dem Ausgang des Gatters OR2 und dem Eingang des Gatters OR3 dient ferner dazu, Abschaltphasen des Timerausgangs 3′, die kurzzeitig auftreten, wenn der Timer Ti retriggert wird, zu überbrücken.

Die Betriebsspannung der Fernanzeigevorrichtung ist mit dem Zündschloß bzw. Fahrtschalter (nicht gezeigt) des Fahrzeugs ein- bzw. ausschaltbar. Beim Einschalten der Betriebsspannung geben die Monoflops MF1, MF2 einen Einschaltimpuls ab, der den Timer Ti triggert. Auf diese Weise ist sichergestellt, daß die Fernanzeigevorrichtung den Kupplungszustand unmittelbar nach Einschalten des Zündschlosses automatisch anzeigt.

Falls der Kupplungssensor S1 defekt geworden ist, wird er keine Zustandsänderung mehr anzeigen. Daraus folgt, daß weder das Monoflop MF1 noch das Monoflop MF2 getriggert wird, so daß auch keine Anzeige erfolgt.

Die Anzeigeeinrichtung 56i braucht vom Fahrer nicht von Hand aktiviert werden, da sie sich bei einem Kupplungszustandswechsel selbst einschaltet. Sie muß auch nicht manuell ausgeschaltet werden, da sie sich nach Ablauf des Timers Ti selbst ausschaltet.

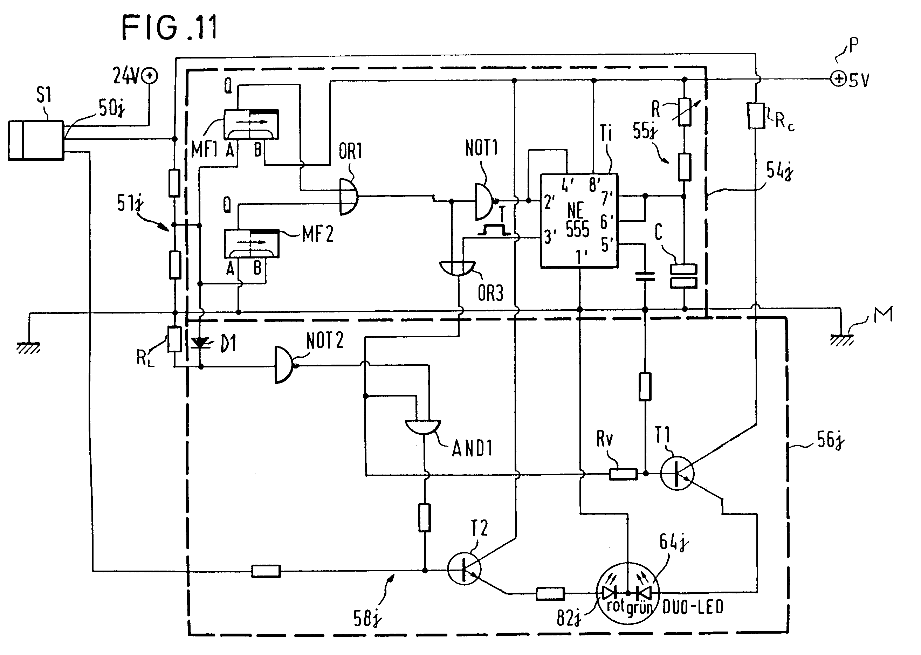

In Fig. 11 ist das elektrische Schaltbild eines ähnlich dem Ausführungsbeispiel gemäß Fig. 10 funktionierenden zehnten Ausführungsbeispiels der Erfindung gezeigt, dessen Abweichungen gegenüber dem in Fig. 10 dargestellten neunten Ausführungsbeispiel nachstehend erläutert werden. Gegenüber dem neunten Ausführungsbeispiel unterscheidet sich das zehnte Ausführungsbeispiel im wesentlichen dadurch, daß der Tastschalter 66i, das OR-Gatter OR2 und das Relais RE1 des neunten Ausführungsbeispiels weggelassen sind, der Ausgang des OR-Gatters OR1 dafür unmittelbar mit dem Eingang des Inverters NOT1 und mit einem der Eingänge des OR-Gatters OR3 verbunden ist und der Transistor T1 mit seinem Kollektor über einen Kollektorwiderstand Rc an dem Ausgang 50j des Kupplungssensors S1 und mit seinem Emitter an dem + Anschluß der Ankupplungskontrolleuchte 64j bzw. des grünes Licht emittierenden Leuchtdiodenteils 64j angeschlossen ist. Der bei Änderung des Kupplungszustandes von dem betreffenden Monoflop MF1 oder MF2 abgegebene Impuls gelangt über das OR-Gatter OR1 und über den Inverter NOT1 an den Triggereingang 2′ des Timers Ti, der daraufhin den Timerimpuls T abgibt. Der Timerimpuls T gelangt über das OR-Gatter OR3 und den Vorwiderstand Rv an die Basis des Transistors T1 und schaltet den Transistor T1 in seinen niederohmigen bzw. durchgeschalteten Zustand. In seinem durchgeschalteten Zustand verbindet der Transistor T1 die Ankupplungskontrolleuchte 64j mit dem Potential am Ausgang 50j des Kupplungssensors S1. Die Ankupplungskontrolleuchte 64j leuchtet somit, wenn die Anhängerkupplung geschlossen und verriegelt ist (positives Potential am Ausgang 50j des Kupplungssensors S1) und der Timer Ti läuft (positives Einschaltsignal T an der Basis des Transistors T1). Die Schaltung gemäß Fig. 11 stellt auf einfache Weise sicher, daß bei einem eventuellen Kurzschluß der Kollektor-Emitter-Strecke des Transistors T1 nur dann Spannung an der Ankupplungskontrolleuchte 64j anliegt, wenn die Kupplung geschlossen und verriegelt ist. Ein Kurzschluß des Transistors T1 führt also nur zum Verlust der Timer-Funktion, nicht aber zu einer falschen Anzeige der Ankupplungskontrolleuchte 64j. Ein Versagen des Transistors T1 in dem Sinne, daß er nicht mehr in seinen niederohmigen bzw. durchgeschalteten Zustand schaltbar ist, hat lediglich zur Folge, daß die Ankupplungskontrolleuchte nicht mehr leuchtet. Dem Fahrer wird bei einem Defekt des Transitors T1 auf keinen Fall fälschlicherweise signalisiert, daß die Kupplung geschlossen und verriegelt sei, wenn sie nicht geschlossen und verriegelt ist. Die in Fig. 11 gezeigte Diode D1 und der Widerstand R_{L} am Eingang des Inverters NOT2 haben keine logische Schaltungsfunktionen. Sie dienen lediglich zur Vermeidung von Störungen der logischen Eingangspegel des Inverters NOT2. Die Ansteuerung der Abkupplungskontrolleuchte 82j erfolgt ansonsten in der bereits unter Bezugnahme auf Fig. 10 beschriebenen Weise.

## Patentansprüche

1. Fernanzeigevorrichtung für Fahrzeug-Anhängerkupplungen, welche bei Ankupplung eines Anhängers eine Schließ- und Verriegelungsstellung einnehmen,
- mit einem Kupplungssensor (S1), insbesondere induktiven Näherungsschalter, welcher eine den geschlossenen und verriegelten Zustand der Anhängerkupplung (K) kennzeichnende Stellung eines Kupplungsteils (15) überwacht und bei geschlossener und verriegelter Anhängerkupplung (K) ein Signal liefert,
- und mit einer dem Kupplungssensor (S1) nachgeschalteten Zustandsanzeigeeinrichtung (56a;...;56j), welche gegebenenfalls manuell zur Signalisierung des Kupplungszustandes aktivierbar ist,
**gekennzeichnet** durch eine triggerbare Zeitschalteinrichtung (54a;...;54j), welche bei einer Änderung des Kupplungszustandes ein von dem Kupplungssensor (S1) ausgelöstes Triggersignal registriert und daraufhin die Zustandsanzeigeeinrichtung (56a;...;56j) für eine vorbestimmte Zeit automatisch aktiviert.

2. Fernanzeigevorrichtung nach Anspruch 1,
**dadurch gekennzeichnet**, daß die Zustandsanzeigeeinrichtung (56a;...;56j) eine Ankupplungskontrolleuchte (64a;..;64j) umfaßt, die leuchtet, wenn die Anhängerkupplung geschlossen und verriegelt und die Zustandsanzeigeeinrichtung (56a;...;56j) aktiviert ist.

3. Fernanzeigevorrichtung nach Anspruch 1 oder 2, **dadurch gekennzeichnet**, daß ein Blinkgeber 76b vorgesehen ist, der die Ankupplungskontrolleuchte (64b) zum blinken anregt, wenn die Anhängerkupplung nicht geschlossen und verriegelt ist und die Zustandsanzeigeeinrichtung (56b) aktiviert ist.

4. Fernanzeigevorrichtung nach Anspruch 1, 2 oder 3,
**dadurch gekennzeichnet**, daß eine Monitorkontrolleuchte (80c) vorgesehen ist, die leuchtet, wenn die Zustandsanzeigeeinrichtung (56c) aktiviert ist.

5. Fernanzeigevorrichtung nach wenigstens einem der Ansprüche 1 bis 4,
**dadurch gekennzeichnet**, daß die Zustandsanzeigeeinrichtung (56d;...;56j) eine Abkupplungskontrolleuchte (82d;...;82j) umfaßt, die leuchtet, wenn die Anhängerkupplung nicht geschlossen und verriegelt und die Zustandsanzeigeeinrichtung (56d;...;56j) aktiviert ist.

6. Fernanzeigevorrichtung nach wenigstens einem der vorhergehenden Ansprüche,
**dadurch gekennzeichnet**, daß ein den geöffneten und einkuppelbereiten Zustand der Anhängerkupplung (K) registrierender Kupplungsbereitschaftssensor (S3), insbesondere induktiver Näherungsschalter, vorgesehen ist, der zur Signalisierung des geöffneten und einkuppelbereiten Zustands mit der Anzeigeeinrichtung (56e; 56f; 56h) verbunden ist, und daß die triggerbare Zeitschalteinrichtung (54e; 54f; 54h ) bei Änderung des von dem Kupplungsbereitschaftssensor (S3) überwachten Kupplungszustands die Zustandsanzeigeeinrichtung (56e; 56f; 56h) für eine vorbestimmte Zeit automatisch aktiviert.

7. Fernanzeigevorrichtung nach Anspruch 6, **dadurch gekennzeichnet**, daß die Zustandsanzeigeeinrichtung (56e; 56f; 56h) eine Kupplungsbereitschaftskontrolleuchte (82e; 82f; 82h) umfaßt, die leuchtet, wenn die Anhängerkupplung geöffnet und einkuppelbereit und die Zustandsanzeigeeinrichtung (56e; 56f; 56h) aktiviert ist.

8. Fernanzeigevorrichtung nach Anspruch 6 oder 7, **dadurch gekennzeichnet**, daß eine Warnleuchte (86e; 86f; 86h) vorgesehen ist, welche ein Signal, insbesondere ein Blinksignal liefert, solange die Anhängerkupplung in einem Zwischenzustand ist, der dann vorliegt, wenn die Anhängerkupplung weder im geschlossenen und verriegelten Zustand noch im offenen und einkuppelbereiten Zustand ist.

9. Fernanzeigevorrichtung nach Anspruch 6, 7 oder 8,
**gekennzeichnet**
durch eine Zusatzwarnleuchte (92f; 92h), welche ein Signal, insbesondere ein Blinksignal liefert, wenn die Anhängerkupplung aus dem geöffneten und einkuppelbereiten Zustand heraus in einen Zwischenzustand übergegangen ist, der dann vorliegt, wenn die Anhängerkupplung weder im geschlossenen und verriegelten Zustand noch im offenen und einkuppelbereiten Zustand ist.

10. Fernanzeigevorrichtung nach Anspruch 6, 7, 8 oder 9,
**gekennzeichnet** durch eine weitere Zusatzwarnleuchte (94f; 94h), welche ein Signal, insbesondere ein Blinksignal liefert, wenn die Anhängerkupplung aus dem geschlossenen und verriegelten Zustand heraus in einen Zwischenzustand übergegangen ist, der dann vorliegt, wenn die Anhängerkupplung weder im geschlossenen und verriegelten Zustand noch im offenen und einkuppelbereiten Zustand ist.

11. Fernanzeigevorrichtung nach wenigstens einem der vorhergehenden Ansprüche,
**gekennzeichnet** durch einen weiteren an der Zustandsanzeigeeinrichtung (56g;...;56h) angeschlossenen Sensor (S2), der registriert, ob sich ein zu kuppelndes Teil; (z.B. die Zugöse eines Anhängers) in der Anhängerkupplung befindet.

12. Fernanzeigevorrichtung nach Anspruch 11,
**dadurch gekennzeichnet**, daß die Zustandsanzeigeeinrichtung (56g; 56h) eine Kontrolleuchte (82g; 108h) umfaßt, die bei aktivierter Zustandsanzeigeeinrichtung (56g; 56h) leuchtet, wenn die Anhängerkupplung geschlossen und verriegelt ist und der weitere Sensor (S2) ein zu kuppelndes Teil in der Anhängerkupplung registriert.

13. Fernanzeigevorrichtung nach Anspruch 11 oder 12,
**dadurch gekennzeichnet**, daß die Zustandsanzeigeeinrichtung (56h) eine Kontrolleuchte (86h) umfaßt, die bei aktivierter Zustandsanzeigeeinrichtung (56h) leuchtet, wenn die Anhängerkupplung nicht im geöffneten und einkuppelbereiten Zustand ist und sich kein zu kuppelndes Teil in der Anhängerkupplung befindet.

14. Fernanzeigevorrichtung nach wenigstens einem der vorhergehenden Ansprüche,
**dadurch gekennzeichnet**, daß wenigstens eine, insbesondere alle Kontrolleuchten bzw. Warnleuchten als Leuchtdioden ausgebildet sind.

15. Fernanzeigevorrichtung nach wenigstens einem der vorhergehenden Ansprüche,
**dadurch gekennzeichnet**, daß ein von Hand zu betätigender Schalter (66a;...;66i) zur manuellen Aktivierung der Zustandsanzeigeeinrichtung (56a;...;56i) vorgesehen ist.

16. Fernanzeigevorrichtung nach wenigstens einem der vorhergehenden Ansprüche,
**dadurch gekennzeichnet**, daß die Versorgungsspannung der Fernanzeigevorrichtung mit dem Zündschloß des Fahrzeugs ein- und ausschaltbar ist, und daß die Zeitschalteinrichtung (54a;...;54j) die Zustandsanzeigeeinrichtung (56a;...;56j) für eine vorbestimmte Zeit aktiviert, wenn die Versorgungsspannung eingeschaltet wird.

17. Fernanzeigevorrichtung nach wenigstens einem der vorhergehenden Ansprüche,
**dadurch gekennzeichnet**, daß die Zustandsanzeigeeinrichtung wenigstens einen akustischen Kontrollmelder (90e) umfaßt.

## Claims

1. A remote display device for vehicle trailer couplings which, when a trailer is coupled on, assume a closed and locked position,
- with a coupling sensor (S1), particularly an inductive proximity switch, which monitors the closed and locked condition of the trailer coupling (K) of a coupling part (15) and delivers a signal when the trailer coupling (K) is closed and locked;
- and with, downstream of the coupling sensor (S1), a state indicating means (56a;...;56j) which can if necessary be manually activated to signal the coupling situation,
characterised by a triggerable time switching means (54a;...54j) which, when there is a change in the coupling situation, records a trigger signal released by the coupling sensor (S1) and whereupon automatically actuates the condition indicating means (56a;...;56j) for a predetermined time.

2. A remote display device according to claim 1, characterised in that the condition indicating device (56a;...;56j) comprises a coupling-on monitoring lamp (64a;...;64j) which becomes illuminated when the trailer coupling is closed and locked and the condition indicating device (56a;...;56j) is activated.

3. A remote display device according to claim 1 or 2, characterised in that a flashing transmitter (76b) is provided which causes the coupled-on monitoring light (64b) to flash when the trailer coupling is not closed and locked and the situation display (56b) is activated.

4. A remote display device according to claim 1, 2 or 3, characterised in that a monitor light (80c) is provided which lights up when the situation indicating device (56c) is activated.

5. A remote display device according to at least one of claims 1 to 4, characterised in that the situation display device (56d;...;56j) comprises a coupling disengagement monitoring light (82d);...;82j) which lights up when the trailer coupling is not closed and locked and the situation display device (56d;...;56j) is activated.

6. A remote display device according to at least one of the preceding claims, characterised in that a coupling readiness sensor (53), particularly an inductive proximity switch, is provided which registers the opened and ready-to-couple condition of the trailer coupling (K) and which for signalling the opened and coupling readiness condition is connected to the display device (56e; 56f; 56h) and in that the triggerable time switching device (54e; 54f; 54h) automatically activates the situation display device (56e; 56f; 56h) when there is a change in the coupling condition monitored by the coupling readiness sensor (S3).

7. A remote display device according to claim 6, characterised in that the situation display device (56e; 56f; 56h) comprises a coupling readiness monitoring light (82e; 82f; 82h) which lights up when the trailer coupling is opened and ready to be coupled and the situation display device (56e; 56f; 56h) is activated.

8. A remote display device according to claim 6 or 7, characterised in that a warning light (86e; 86f; 86h) is provided which delivers a signal, particularly a flashing signal, while the trailer coupling is in an intermediate state which occurs when the trailer coupling is neither in the closed and locked condition nor in the open and coupleable condition.

9. A remote display device according to claim 6, 7 or 8, characterised by an auxiliary warning light (92f; 92h) which delivers a signal, particularly a flashing signal, when the trailer coupling has moved out of the opened and coupleable condition into an intermediate state which occurs when the trailer coupling is neither in the closed and locked condition nor in the open and coupleable state.

10. A remote display device according to claim 6, 7, 8 or 9, characterised by a further auxiliary warning light (94f; 94h) which delivers a signal, particularly a flashing signal, when the trailer coupling has moved out of the closed and locked condition into an intermediate state which occurs when the trailer coupling is in neither the closed and locked condition nor in the open and coupleable condition.

11. A remote display device according to at least one of the preceding claims, characterised by, connected to the situation display device (56g;...;56h) a further sensor (S2) which registers whether a part to be coupled (e.g. the towing lug of a trailer) is disposed in the trailer coupling.

12. A remote display device according to claim 12, characterised in that the situation display device (56g; 56h) comprises a warning light (82g; 108h) which lights up when the situation display device (56g; 56h)is activated when the trailer coupling is closed and locked and the further sensor (S2) registers a part in the trailer coupling which is to be coupled.

13. A remote display device according to claim 11 or 12, characterised in that the situation display device (56h) comprises a warning light (86h) which lights up when the situation display device (56h) is activated, when the trailer coupling is not in the opened and coupleable condition and when no part to be coupled is present in the trailer coupling.

14. A remote display device according to at least one of the preceding claims, characterised in that at least one and in particular all monitoring lights or warning lights are constructed as light emitting diodes.

15. A remote display device according to at least one of the preceding claims, characterised in that a switch (66a;...;66i) adapted to be manually actuated is provided for manual activation of the situation display device (56a;...56i).

16. A remote display device according to at least one of the preceding claims, characterised in that the supply voltage to the remote display device can be switched on and off by the ignition key of the vehicle and in that the time switching device (54a;...;54j) activates the situation display device (56a;...56j) for a predetermined time when the supply voltage is switched on.

17. A remote display device according to at least one of the preceding claims, characterised in that the situation display device comprises at least one acoustic alarm (90e). Seven sheets of drawings

## Revendications

1. Dispositif d'affichage à distance pour attelage de remorques de véhicules, prenant, lors du couplage d'une remorque, une position de fermeture et de verrouillage, comportant :
- un capteur de couplage (S1), en particulier un interrupteur de proximité inductif, surveillant une position caractérisant l'état fermé et verrouillé de l'attelage de remorque (K) d'une partie de couplage (15) et envoyant un signal lorque l'attelage de remorque (K) est fermé et verrouillé,
- et un dispositif d'affichage d'état (56a;...;56j) mis en circuit à la suite du capteur de couplage (S1) et pouvant être activé, le cas échéant manuellement, en vue de signaler l'état de couplage,
caractérisé en ce qu'il comprend un dispositif de commutation temporisé (54a;...;54j) pouvant être déclenché, qui enregistre, en cas de modification de l'état de couplage, un signal de déclenchement fourni par le capteur de couplage (S1) et actionne automatiquement, à la suite de cela, le dispositif d'affichage d'état (56a;...; 56j), pendant une durée prédéteminée.

2. Dispositif d'affichage à distance selon la revendication 1, caractérisé en ce que le dispositif d'affichage d'état (56a;...56j) comprend un indicateur lumineux de contrôle de couplage (64a;...;64j), qui s'éclaire lorsque l'attelage de remorque est fermé et verrouillé et que le dispositif d'affichage d'état (56a;...;56j) est activé.

3. Dispositif d'affichage à distance selon la revendication 1 ou 2, caractérisé en ce qu'est prévu un dispositif de clignotement (76b), provoquant le clignotement d'un indicateur lumineux de contrôle de couplage (64b) lorsque l'attelage de remorque n'est pas fermé et n'est pas verrouillé et que le dispositif d'affichage d'état (56b) est activé.

4. Dispositif d'affichage à distance selon la revendication 1, 2 ou 3, caractérisé en ce qu'est prévu un indicateur lumineux de contrôle de surveillance (80c), s'illuminant lorsque le dispositif d'affichage d'état (56c) est activé.

5. Dispositif d'affichage à distance selon au moins l'une des revendications 1 à 4, caractérisé en ce que le dispositif d'affichage d'état (56d;...;56j) comprend un indicateur lumineux de contrôle de désaccouplement (82;...;82j), s'illuminant lorsque l'attelage de remorque n'est pas fermé ni verrouillé et que le dispositif indicateur d'état (56d;...56j) est activé

6. Dispositif d'affichage à distance selon au moins l'une des revendications précédentes, caractérisé en ce qu'est prévu un capteur d'état prêt au couplage (S3), en particulier un interrupteur de proximité inductif, enregistrant l'état ouvert et l'état prêt au couplage de l'attelage de remorque (K), en étant relié au dispositif d'affichage (56e; 56f; 56h) en vue d'une signalisation de l'état ouvert et prêt au couplage et en ce que le dispositif de commutation temporisé (54e; 54f; 54h) pouvant être déclenché active automatiquement, pendant une durée prédéterminée, le dispositif d'affichage d'état (54e; 54f; 54h) en cas de modification de l'état de couplage surveillé par le capteur d'état prêt au couplage (S3).

7. Dispositif d'affichage à distance selon la revendication 6, caractérisé en ce que le dispositif d'affichage d'état (56e, 56f, 56h) comprend un indicateur lumineux de contrôle d'état prêt au couplage (82e; 82f; 82h), qui s'éclaire lorsque l'attelage de remorque est ouvert et prêt au couplage et que le dispositif d'affichage d'état (56e; 56f; 56h) est activé.

8. Dispositif d'affichage d'état selon la revendication 6 ou 7, caractérisé en ce qu'est prévu un indicateur lumineux d'alarme ( 86e; 86f; 86h) envoyant un signal, en particulier un signal clignotant, tant que l'attelage de remorque se trouve dans un état intermédiaire, se présentant lorsque l'attelage de remorque n'est ni à l'état fermé et verrouillé ni à l'état ouvert et prêt au couplage.

9. Dispositif d'affichage à distance selon la revendication 6, 7 ou 8, caractérisé en ce qu'un indicateur lumineux d'alarme supplémentaire (92f; 92h) envoie un signal, en particulier un signal clignotant, lorsque l'attelage de remorque est passé de l'état ouvert et prêt au couplage à un état intermédiaire, se présentant lorsque l'attelage de remorque n'est ni à l'état fermé et verrouillé ni à l'état ouvert et prêt au couplage.

10. Dispositif d'affichage à distance selon la revendication 6, 7, 8 ou 9, caractérisé en ce qu'il comporte un autre indicateur lumineux d'alarme supplémentaire (94f; 94h) envoyant un signal, en particulier un signal clignotant, lorsque l'attelage de remorque est passé de l'état fermé et verrouillé à un état intermédiaire, se présentant lorsque l'attelage de remorque n'est ni à l'état fermé et verrouillé ni à l'état ouvert et prêt au couplage.

11. Dispositif d'affichage à distance selon au moins l'une des revendications précédentes, caractérisé en ce qu'il comporte un capteur (S2) supplémentaire, raccordé au dispositif d'affichage d'état (56g;...56h) enregistrant si une partie à accoupler (par exemple un anneau de traction d'une remorque), se trouve dans l'attelage de remorque.

12. Dispositif d'affichage à distance selon la revendication 11, caractérisé en ce que le dispositif d'affichage d'état (56g; 56h) comprend un indicateur lumineux de contrôle (82g; 108h) s'éclairant lorsque le dispositif d'affichage d'état (56g, 56h) est activé, lorsque l'attelage de remorque est fermé et verrouillé et que le capteur supplémentaire (S2) enregistre le fait qu'une partie à accoupler se trouve dans l'attelage de remorque.

13. Dispositif d'affichage à distance selon la revendication 11 ou 12, caractérisé en ce que le dispositif d'affichage d'état (56h) comprend un indicateur lumineux de contrôle (86h), s'éclairant lorsque le dispositif d'affichage d'état (56h) est activé, lorsque l'attelage de remorque ne se trouve pas à l'état ouvert et prêt au couplage et qu'aucune partie à accoupler ne se trouve dans l'attelage de remorque.

14. Dispositif d'affichage à distance selon au moins l'une des revendications précédentes, caractérisé en ce qu'au moins un, en particulier tous les indicateurs lumineux de contrôle ou d'alarme sont réalisés sous forme de diodes lumineuses.

15. Dispositif d'affichage à distance selon au moins l'une des revendications précédentes, caractérisé par en ce qu'est prévu un interrupteur (66a;...;66i) à actionner manuellement, pour activer manuellement le dispositif d'affichage d'état (56a;...;56i).

16. Dispositif d'affichage d'état selon au moins l'une des revendications précédentes, caractérisé en ce que la tension d'alimentation du dispositif d'affichage à distance peut être branchée et coupée avec la serrure de contact d'allumage du véhicule, et en ce que le dispositif de commutation temporisé (54a;...;54j) active le dispositif d'affichage d'état (56a;...;56j) pendant une durée prédéterminée, lorsque la tension d'alimentation est branchée.

17. Dispositif d'affichage à distance selon au moins l'une des revendications précédentes, caractérisé en ce que le dispositif d'affichage d'état comprend au moins un indicateur de contrôle (90e) sonore.
